# EUROPÄISCHE PATENTSCHRIFT

(11) **EP 2 917 077 B1**
(45) Veröffentlichungstag und Bekanntmachung des Hinweises auf die Patenterteilung: **09.01.2019**
(21) Anmeldenummer: 13789329.3
(22) Anmeldetag: 12.11.2013
(51) Int. Cl.: B60S 1/34, B60S 1/40, B60S 1/36

(54) **WISCHARM FÜR EIN WISCHBLATT ZUM REINIGEN EINER FAHRZEUGSCHEIBE SOWIE WISCHVORRICHTUNG ZUM REINIGEN EINER FAHRZEUGSCHEIBE**
WIPER ARM FROM A WIPER BLADE FOR CLEANING A VEHICLE WINDOW, AND WIPER DEVICE FOR CLEANING A VEHICLE WINDOW
BRAS DE RACLETTE D'ESSUIE-GLACE SERVANT À NETTOYER UNE VITRE DE VÉHICULE AINSI QUE DISPOSITIF D'ESSUIE-GLACE SERVANT À NETTOYER UNE VITRE DE VÉHICULE

(30) Priorität: 12.11.2012 DE 102012110859
(43) Veröffentlichungstag der Anmeldung: 16.09.2015
(73) Patentinhaber: Valeo Wischersysteme GmbH, 74321 Bietigheim-Bissingen (DE)
(72) Erfinder: SCHOLL, Wolfgang, 74376 Gemmrigheim (DE); FERENBACH, Markus, 74321 Bietigheim-Bissingen (DE); BOHN, Michael, 71384 Weinstadt (DE); WALDENMAIER, Alexander, 71088 Holzgerlingen (DE)
(74) Vertreter: Callu-Danseux, Violaine
(86) Internationale Anmeldenummer: PCT/EP2013/073598
(87) Internationale Veröffentlichungsnummer: WO 2014/072523

(56) Entgegenhaltungen:
- DE-A1- 1 806 719
- FR-A1- 2 755 928
- GB-A- 2 146 239
- US-A- 1 573 618
- US-A- 2 094 732
- US-A- 3 953 908

## Beschreibung

### Stand der Technik

Die Erfindung betrifft einen Wischarm für ein Wischblatt zum Reinigen einer Fahrzeugscheibe nach dem Oberbegriff des Anspruchs 1. Ferner betrifft die Erfindung eine Wischvorrichtung unter Verwendung eines erfindungsgemäßen Wischarms und eines Wischblatts.
Ein Wischarm nach dem Oberbegriff des Anspruchs 1 ist aus der Praxis bereits bekannt (siehe US-A-1573618). Ein derartiger Wischarm, der zum Reinigen einer Front- oder Heckscheibe des Kraftfahrzeugs dient, ist an einem Ende des Wischarms mit einem Wischerantrieb, z.B. direkt mit einem Wischermotor, oder über ein Wischgestänge mit dem Wischermotor drehfest verbunden. Der Wischarm trägt auf der dem Wischerantrieb abgewandten Seite an seinem Endbereich ein Wischblatt, das üblicherweise auswechselbar am Wischarm befestigt ist. Je nach Fahrzeugtyp sowie dem Ort der Anordnung des Wischarms im Bereich der Front- oder Heckscheibe ergeben sich jeweils spezifische Anpassungen des Wischarms sowie ggf. des Wischblatts, damit jeweils ein üblicherweise möglichst großes Wischfeld der Fahrzeugscheibe von dem Wischblatt gereinigt werden kann. Darüber hinaus werden Wischblätter oftmals in standardisierten Größen bzw. Längen hergestellt, woraus folgt, dass der Wischarm jeweils dem individuellen Kraftfahrzeug angepasst wird, damit ein standardisiertes Wischblatt verwendet werden kann. Ein derartiges Vorgehen ist für einen Hersteller von Scheibenwischanlagen relativ aufwändig, da für jeden Wischarm üblicherweise eigene Fertigungseinrichtungen mit entsprechenden Investitionskosten erstellt werden müssen. Darüber hinaus sind zusätzliche Investitionen, z.B. durch entsprechende Lagerhaltung, Fertigungsvorbereitung usw. erforderlich, um für einen Fahrzeughersteller bzw. für den Ersatzteilebedarf jeweils genügend spezifische Wischarme bereitstellen zu können.

### Offenbarung der Erfindung

In Kenntnis des oben genannten Stands der Technik liegt der Erfindung die Aufgabe zugrunde, einen Wischarm für ein Wischblatt zum Reinigen einer Fahrzeugscheibe nach dem Oberbegriff des Anspruchs 1 derart weiterzubilden, dass ein und derselbe Wischarm für unterschiedliche Anwendungen eingesetzt werden kann. Mit anderen Worten gesagt bedeutet dies, dass ein Wischarm beispielsweise für verschiedene Kraftfahrzeuge zur Reinigung der Frontscheibe, und/oder zur Reinigung unterschiedlicher Heckscheiben verwendet werden kann. Diese Aufgabe wird erfindungsgemäß bei einem Wischarm für ein Wischblatt zum Reinigen einer Fahrzeugscheibe mit den Merkmalen des Anspruchs 1 dadurch gelöst, dass der Wischarm mehrere, voneinander örtlich getrennte Befestigungsstellen für das Wischblatt aufweist und dass der Wischarm eine Querschnitt U-förmige Abdeckung aus Kunststoff aufweist. Das bedeutet, dass ein Wischblatt an unterschiedlichen Positionen am Wischarm befestigt werden kann.

Vorteilhafte Weiterbildungen des erfindungsgemäßen Wischarms für ein Wischblatt sind in den Unteransprüchen aufgeführt. In den Rahmen der Erfindung fallen sämtliche Kombinationen aus zumindest zwei von in den Ansprüchen, der Beschreibung und/oder den Figuren offenbarten Merkmalen.

Nach der Erfindung ist eine Ausgestaltung des Wischarms, bei der die Befestigungsstellen entlang des Wischarms in dessen Längsrichtung beabstandet zueinander angeordnet sind. Dadurch folgt, dass beispielsweise ein und dasselbe Wischblatt in einem unterschiedlichen Abstand zur Lagerung des Wischarms an seinem Wischerantrieb befestigt werden kann. Dadurch ergeben sich unterschiedliche Formen bzw. Größen eines von dem Wischblatt gereinigten Wischfeldes.
Besonders bevorzugt ist es bei zuletzt genannter Ausführungsform, wenn alle Befestigungsstellen jeweils gleich ausgebildet sind. Dadurch ist es möglich, ein einen bestimmten Wischblattadapter aufweisendes Wischblatt an unterschiedlichen Positionen des Wischarms zu befestigen.

Es ist jedoch auch denkbar, dass wenigstens eine Befestigungsstelle sich von wenigstens einer zweiten Befestigungsstelle (konstruktiv) unterscheidet. Dadurch wird insbesondere der Vorteil erzielt, dass ein bestimmtes Wischblatt mit einem spezifischen Wischblattadapter nur an einer bestimmten Befestigungsstelle bzw. an einem bestimmten Verbindungsort an dem Wischarm befestigt werden kann. Dadurch wird insbesondere verhindert, dass ein Bediener ein Wischblatt versehentlich an einer für den spezifischen Anwendungsfall ungeeigneten Befestigungsstelle am Wischarm befestigt, was ansonsten beispielsweise die Folge hätte, dass das Wischblatt beim Betrieb durch Berührung mit Fahrzeugteilen oder sonstige Umstände beschädigt wird.

Eine weitere Ausgestaltung der Erfindung sieht vor, dass die unterschiedlichen Befestigungsstellen im gleichen Bereich in Bezug auf die Längsrichtung des Wischarms angeordnet sind. Dadurch ist es möglich, Wischblätter mit unterschiedlichen Wischblattadaptern, die beispielsweise dieselbe Wischblattlänge aufweisen, an ein und derselben Stelle des Wischarms befestigen zu können. Insbesondere werden dadurch für einen Benutzer umständliche Umbauarbeiten des Wischblatts durch Anbringen des jeweils erforderlichen Wischblattadapters vermieden.

Um den Wischarm an das jeweils konkret verwendete Wischblatt und seinem Befestigungsort anzupassen, damit eine bestimmte Anpresskraft des Wischblatts an der Fahrzeugscheibe erzielt wird, ist es in einer weiteren Variante vorgesehen, dass eine Zugfeder zur Erzeugung einer definierten Anpresskraft des Wischblatts auf die Fahrzeugscheibe vorgesehen ist, und dass der Wischarm einen Aufhängungsbereich für ein Federende der Zugfeder aufweist, in dem das Federende zur Erzeugung unterschiedlicher Anpresskräfte an unterschiedlichen Positionen befestigt werden kann.

Die Erfindung umfasst auch eine Wischvorrichtung zum Reinigen von Fahrzeugscheiben mit einem erfindungsgemäßen Wischarm und einem an dem Wischarm befestigten Wischblatt.

Insbesondere kann es dabei vorgesehen sein, dass an dem Wischarm Wischblätter unterschiedlicher Länge befestigbar sind. Dadurch wird eine einfache Anpassung der Wischvorrichtung an unterschiedliche Fahrzeugtypen bzw. Fahrzeugscheibengrößen ermöglicht. Ebenso ist es denkbar, dass an dem Wischarm Wischblätter mit unterschiedlichen Befestigungselementen (Wischblattadaptern) befestigbar sind. Dadurch wird es insbesondere vermieden, dass ein Bediener an einem Wischblatt ein spezielles Adapterelement verwenden muss, damit er das Wischblatt an dem Wischarm montieren kann.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
- Fig. 1: eine Seitenansicht auf einen erfindungsgemäßen Wischarm,
- Fig. 2: eine Unteransicht auf den Wischarm gemäß Fig. 1 und
- Fig. 3 bis Fig. 5: den Wischarm gemäß Fig. 1 und 2, wenn dieser mit jeweils unterschiedlichen Wischblättern, die eine unterschiedliche Länge aufweisen, verbunden ist, in Seitenansicht, sowie eine Darstellung der mit den Wischblättern erzielbaren Wischfelder.

Gleiche Elemente bzw. Elemente mit gleicher Funktion sind in den Figuren mit den gleichen Bezugsziffern versehen.

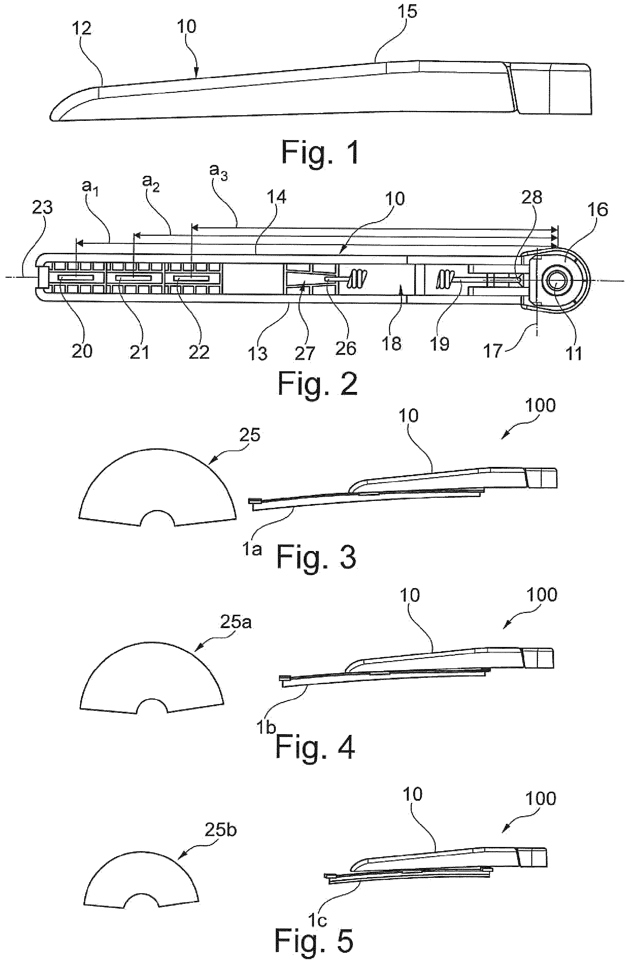

In den Fig. 1 und 2 ist ein erfindungsgemäßer Wischarm 10 für ein in den Fig. 3 bis 5 dargestelltes Wischblatt 1a bis 1c dargestellt. Der Wischarm 10 bildet zusammen mit dem Wischblatt 1a bis 1c eine Wischvorrichtung 100 zum Reinigen einer Fahrzeugscheibe aus. Dabei kann es sich bei der Fahrzeugscheibe entweder um eine Frontscheibe als auch um eine Heckscheibe des Kraftfahrzeugs handeln.

Der in den Fig. 1 und 2 dargestellte Wischarm 10 ist langgestreckt ausgebildet und weist in einem ersten Endbereich eine Wischarmaufnahme 11 zur drehfesten Befestigung des Wischarms 10 an einem Wischerantrieb auf. Bei dem Wischerantrieb kann es sich entweder um die Antriebswelle eines Wischermotors, oder aber um eine Welle eines mit einem Wischermotor wirkverbunden angeordneten Wischergestells handeln. Der Wischarm 10 wird dabei in üblicher Art und Weise durch beispielsweise eine konische Ausbildung einer Antriebswelle, die mit der Wischarmaufnahme 11 des Wischarms 10 zusammenwirkt, mit der Antriebswelle drehfest befestigt.

Der Wischarm 10 weist eine beispielsweise aus Kunststoff bestehende, im Querschnitt U-förmige Abdeckung 12 auf, so dass die beiden gegenüberliegenden Seiten 13, 14 sowie die der nicht dargestellten Fahrzeugscheibe abgewandte Oberseite 15 des Wischarms 10 eine geschlossene Oberfläche ausbilden. Selbstverständlich liegt es auch im Rahmen der Erfindung, die Abdeckung 12, insbesondere wenn der Wischarm 10 zur Reinigung einer Frontscheibe des Kraftfahrzeugs vorgesehen ist, spoilerartiger zu gestalten.

Wie am Besten anhand der Fig. 2 erkennbar ist, weist der Wischarm 10 ein Gelenkstück 16 auf, in der die Wischarmaufnahme 11 ausgebildet ist. Das Gelenkstück 16 ist in einer Schwenkachse 17 mit einer Wischstange 18 verbunden ist. Zwischen dem Gelenkstück 16 und der Wischstange 18 ist eine Zugfeder 19 angeordnet, die die Wischstange 18 in an sich bekannter Art und Weise mit einer Zugkraft beaufschlagt, derart, dass der Wischarm 10 bzw. das Wischblatt 1a bis 1c mit einer bestimmten Anpresskraft auf die Fahrzeugscheibe gedrückt wird.

An der der Fahrzeugscheibe zugewandten Seite der Wischstange 18 sind in dem Bereich zwischen den beiden Seiten 13, 14 der Abdeckung 12 mehrere Verbindungs- bzw. Befestigungsstellen 20 bis 22 für das Wischblatt 1a bis 1c angeordnet. Die im Ausführungsbeispiel drei Befestigungsstellen 20 bis 22 fluchten dabei mit der Längsrichtung bzw. Längsachse 23 der Wischstange 18 und weisen zur Wischarmaufnahme 11 einen jeweils unterschiedlichen Abstand a₁, a₂ bzw. a₃ auf. Im dargestellten Ausführungsbeispiel ist der Abstand zwischen den Befestigungsstellen 20 und 21 bzw. 21 und 22 jeweils gleich groß ausgebildet. Die Befestigungsstellen 20 bis 22 können jedoch auch unterschiedliche Abstände zueinander aufweisen. Darüber hinaus liegt es selbstverständlich im Rahmen der Erfindung, weniger als drei Befestigungsstellen 20 bis 22 bzw. mehr als drei Befestigungsstellen 20 bis 23 am Wischarm 10 vorzusehen.

Anhand der Darstellung der Befestigungsstellen 20 bis 22 in der Fig. 2 erkennt man ferner, dass die Befestigungsstellen 20 bis 22 jeweils gleich ausgebildet sind. Es liegt jedoch auch im Rahmen der Erfindung, dass wenigstens eine der Befestigungsstellen 20 bis 22 sich von einer anderen Befestigungsstelle 20 bis 22 hinsichtlich ihrer Ausbildung unterscheidet. Ebenso liegt es im Rahmen der Erfindung, dass zwei unterschiedliche Befestigungsstellen (für unterschiedliche Wischblattadapter) in ein und demselben Abstand a₁, a₂, a₃ zur Wischarmaufnahme 11 vorgesehen sein können.

Die Befestigungsstellen 20 bis 22 dienen der austauschbaren Befestigung des Wischblatts 1a bis 1c über ein in den Figuren nicht dargestelltes, an dem Wischblatt 1a bis 1c angeordnetes Verbindungselement in Form eines Wischblattadapters.

In der Fig. 3 ist der Fall dargestellt, bei dem das Wischblatt 1a, das gegenüber den Wischblättern 1b und 1c die größte Wischblattlänge aufweist, an der Befestigungsstelle 20 befestigt ist, die den größten Abstand zur Wischarmaufnahme 11 aufweist. Somit erkennt man, dass mittels einer derartigen Wischvorrichtung 100 ein Wischfeld 25 von relativ großer Größe erzeugt wird.

In der Fig. 4 ist der Fall dargestellt, bei der das Wischblatt 1b, das eine geringere Wischblattlänge aufweist als das Wischblatt 1a, jedoch eine größere Wischblattlänge als das Wischblatt 1c, an der Befestigungsstelle 21 befestigt ist. Die Befestigungsstelle 21 weist von der Wischarmaufnahme 11 einen kleineren Abstand auf als die Befestigungsstelle 20, jedoch einen größeren Abstand als die Befestigungsstelle 22. Anhand der Fig. 4 erkennt man ferner, das Wischfeld 25a, dessen Größe geringer ist als das Wischfeld 25.

Zuletzt ist in der Fig. 5 der Fall dargestellt, bei der das geringste Wischblattlänge aufweisende Wischblatt 1c an der Befestigungsstelle 22 befestigt ist. Die Befestigungsstelle 22 weist wiederum den geringsten Abstand zur Wischarmaufnahme 11 auf. Man erkennt, dass mittels einer derart ausgebildeten Wischvorrichtung 100 ein Wischfeld 25b erzeugt wird, das eine geringere Größe aufweist als die beiden Wischfelder 25a, 25b.

Falls es die räumlichen Gegebenheiten am Wischarm 10 ermöglichen, ist es selbstverständlich auch denkbar, beispielsweise das Wischblatt 1b an der Befestigungsstelle 22 des Wischarms 10 anzuordnen. Selbstverständlich liegt es auch im Rahmen der Erfindung, das Wischblatt 1c z.B. an der Befestigungsstelle 20 anzuordnen. Je nach Kombination der verwendeten Befestigungsstelle 20 bis 22 sowie des verwendeten Wischblatts 1a bis 1c sind damit unterschiedlich große Wischfelder 25 sowie unterschiedliche Anordnungen der Wischfelder 25 möglich.

Um bei der Verwendung unterschiedlicher Wischblätter 1a bis 1c, die darüber hinaus an unterschiedlichen Befestigungsstellen 20 bis 22 angeordnet werden können eine bestimmte (Soll-) Anpresskraft des Wischblatts 1a bis 1c an der Fahrzeugscheibe zu erzielen ist es bevorzugt vorgesehen, dass die Anpresskraft veränderbar ist. Im einfachsten Fall erfolgt dies dadurch, dass die Federhärte und/oder Geometrie (zum Beispiel) die Länge der Zugfeder 19 dem jeweiligen konkreten Anwendungsfall angepasst ist. Es kann jedoch auch vorgesehen sein, dass bei Verwendung ein und derselben Zugfeder 19 die Anpresskraft durch eine Aufhängung des einen Federendes 26 an unterschiedlichen Positionen in einem Aufhängungsbereich 27 des Wischarms 10 verändert wird. Dabei ist offensichtlich, dass sich die Anpresskraft des Wischblatts 1a bis 1c auf der Fahrzeugscheibe erhöht, wenn das Federende 26 innerhalb des Aufhängungsbereichs 27 an einem Ort befestigt wird, der einen relativ großen Abstand zum anderen Aufhängungspunkt 28 der Zugfeder 19 aufweist. Hierzu sind in dem Aufhängungsbereich 27 beispielsweise unterschiedliche Aufhängungspunkte (nicht dargestellt) angeordnet, an denen das Federende 26 mittelbar (zum Beispiel mittels Hilfselementen wie Stiften usw.) oder unmittelbar befestigt werden kann.

Die soweit beschriebenen Wischblätter 1a bis 1c sowie die Wischvorrichtung 100 können in vielfältiger Art und Weise abgewandelt werden, ohne vom Erfindungsgedanken abzuweichen. So ist es beispielsweise denkbar, das Gelenkstück 17 zusammen mit dem Wischarm 10 als einstückiges Bauteil auszubilden, wobei das Gelenkstück 17 und/oder der Wischarm 10 aus Kunststoff besteht. Auch kann das Wischblatt, in Abänderung zu der in den Figuren erkennbaren Darstellung, als sogenannter Flachblattwischer ausgebildet sein. Auch ist die Anbindung des Wischblatts 1a bis 1c nicht auf die dargestellten Verbindungssysteme beschränkt. So können beispielweise im Rahmen der Erfindung auch Verbindungssysteme zur Anwendung kommen, wie diese in der US2009/0199357A1 der Anmelderin oder der US2011/0247166 dargestellt und beschrieben sind.

### Bezugszeichen

- 1a bis 1c: Wischblatt

- 10: Wischarm
- 11: Wischarmaufnahme
- 12: Abdeckung
- 13: Seite
- 14: Seite
- 15: Oberseite
- 16: Gelenkstück
- 17: Schwenkachse
- 18: Wischstange
- 19: Zugfeder
- 20 bis 22: Befestigungsstelle
- 23: Längsachse

- 25, 25a, 25b: Wischfeld
- 26: Federende
- 27: Aufhängungsbereich
- 28: Aufhängungspunkt
- 100: Wischvorrichtung
- a₁ bis a₃: Abstand

## Patentansprüche

1. Wischarm (10) für ein Wischblatt (1a bis 1c) zum Reinigen einer Fahrzeugscheibe, mit einer an einem Endbereich des Wischarms (10) angeordneten Wischarmaufnahme (11) zur Befestigung des Wischarms (10) an einem Wischerantrieb und wenigstens einer Befestigungsstelle (20 bis 22) zur Verbindung des Wischarms (10) mit dem Wischblatt (1a bis 1c), wobei der Wischarm (10) mehrere, voneinander örtlich getrennte Befestigungsstellen (20 bis 22) aufweist, die beabstandet entlang der Längsachse (23) des Wischarms (10) angeordnet sind, um unterschiedliche Formen bzw. Größen eines von dem Wischblatt gereinigten Wischfeldes sich zu ergeben,
**dadurch gekennzeichnet, dass** der Wischarm (10) eine Querschnitt U-förmige Abdeckung (12) aus Kunststoff aufweist.

2. Wischarm nach Anspruch 1,
**dadurch gekennzeichnet,**
**dass** die Befestigungsstellen (20 bis 22) jeweils gleich ausgebildet sind.

3. Wischarm nach Anspruch 1,
**dadurch gekennzeichnet,**
**dass** wenigstens eine Befestigungsstelle (20 bis 22) sich von wenigstens einer zweiten Befestigungsstelle (20 bis 22) unterscheidet.

4. Wischarm nach Anspruch 3,
**dadurch gekennzeichnet,**
**dass** die beiden unterschiedlichen Befestigungsstellen (20 bis 22) in Bezug auf die Längsachse (23) des Wischarms (10) im gleichen Bereich des Wischarms (10) angeordnet sind.

5. Wischarm nach einem der Ansprüche 1 bis 4,
**dadurch gekennzeichnet,**
**dass** eine Zugfeder (19) zur Erzeugung einer definierten Anpresskraft des Wischblatts (1a bis 1c) auf die Fahrzeugscheibe vorgesehen ist, und dass der Wischarm (10) einen Aufhängungsbereich (27) für ein Federende (26) der Zugfeder (19) aufweist, in dem das Federende (26) zur Erzeugung unterschiedlicher Anpresskräfte an unterschiedlichen Positionen befestigt werden kann.

6. Wischvorrichtung (100) zum Reinigen einer Fahrzeugscheibe, mit einem Wischarm (10) nach einem der Ansprüche 1 bis 5 und einem an dem Wischarm (10) befestigten Wischblatt (1a bis 1c).

7. Wischvorrichtung nach Anspruch 6,
**dadurch gekennzeichnet,**
**dass** an dem Wischarm (10) Wischblätter (1a bi s1c) unterschiedlicher Länge befestigbar sind.

8. Wischvorrichtung nach Anspruch 6 oder 7,
**dadurch gekennzeichnet,**
**dass** an dem Wischarm (10) Wischblätter (1a bis 1c) mit unterschiedlichen Befestigungselementen befestigbar sind.

9. Wischvorrichtung nach einem der Ansprüche 6 bis 8,
**dadurch gekennzeichnet,**
**dass** der Wischarm (10) zusammen mit einem Gelenkstück (16) als einteiliges Bauteil ausgebildet sind.

## Claims

1. A wiper arm (10) for a wiper blade (1a to 1c) for cleaning a vehicle window, with a wiper arm mount (11), arranged on an end region of the wiper arm (10), for fastening the wiper arm (10) on a wiper drive, and with at least one fastening site (20 to 22) for connecting the wiper arm (10) with the wiper blade (1a to 1c), wherein the wiper arm (10) has several fastening sites (20 to 22), locally separated from one another, which are arranged spaced apart along the longitudinal axis (23) of the wiper arm (10) so as to give different shapes or sizes of a wiping field cleaned by the wiper blade, **characterized in that** the wiper arm (10) has a plastic cover (12) U-shaped in cross-section.

2. The wiper arm according to Claim 1,
**characterized in that**
the fastening sites (20 to 22) are respectively constructed identically.

3. The wiper arm according to Claim 1,
**characterized in that**
at least one fastening site (20 to 22) differs from at least a second fastening site (20 to 22).

4. The wiper arm according to Claim 3,
**characterized in that**
the two different fastening sites (20 to 22) are arranged in relation to the longitudinal axis (23) of the wiper arm (10) in the same region of the wiper arm (10) .

5. The wiper arm according to one of Claims 1 to 4, **characterized in that**
a tension spring (19) is provided for generating a defined contact pressure of the wiper blade (1a to 1c) onto the vehicle window, and that the wiper arm (10) has a suspension region (27) for a spring end (26) of the tension spring (19), in which the spring end (26) can be fastened at different positions for generating different contact pressures.

6. A wiper device (100) for cleaning a vehicle window, with a wiper arm (10) according to one of Claims 1 to 5, and with a wiper blade (1a to 1c) fastened on the wiper arm (10).

7. The wiper device according to Claim 6,
**characterized in that**
wiper blades (1a to 1c) of different length are able to be fastened on the wiper arm (10).

8. The wiper device according to Claim 6 or 7, **characterized in that**
wiper blades (1a to 1c) are able to be fastened on the wiper arm (10) with different fastening elements.

9. The wiper device according to one of Claims 6 to 8, **characterized in that**
the wiper arm (10) and the head casting (16) consist of one part.

## Revendications

1. Bras d'essuie-glace (10) pour un balai d'essuie-glace (1a à 1c) pour nettoyer une vitre de véhicule, comprenant un logement de bras d'essuie-glace (11) disposé au niveau d'une région d'extrémité du bras d'essuie-glace (10) pour la fixation du bras d'essuie-glace (10) à un entraînement d'essuie-glace et au moins un point de fixation (20 à 22) pour la connexion du bras d'essuie-glace (10) au balai d'essuie-glace (1a à 1c), le bras d'essuie-glace (10) présentant plusieurs points de fixation (20 à 22) séparés physiquement les uns des autres, qui sont disposés de manière espacée le long de l'axe longitudinal (23) du bras d'essuie-glace (10) afin qu'il en résulte différentes formes ou tailles d'un champ d'essuyage nettoyé par le balai d'essuie-glace, **caractérisé en ce que** le bras d'essuie-glace (10) présente un recouvrement (12) en plastique de section transversale en forme de U.

2. Bras d'essuie-glace selon la revendication 1, **caractérisé en ce**
**que** les points de fixation (20 à 22) sont réalisés à chaque fois de manière identique.

3. Bras d'essuie-glace selon la revendication 1, **caractérisé en ce**
**qu'**au moins un point de fixation (20 à 22) se distingue d'au moins un deuxième point de fixation (20 à 22) .

4. Bras d'essuie-glace selon la revendication 3, **caractérisé en ce**
**que** les deux points de fixation différents (20 à 22) sont disposés dans la même région du bras d'essuie-glace (10) par rapport à l'axe longitudinal (23) du bras d'essuie-glace (10).

5. Bras d'essuie-glace selon l'une quelconque des revendications 1 à 4,
**caractérisé en ce**
**qu'**un ressort de traction (19) est prévu pour produire une force de pressage définie du bras d'essuie-glace (1a à 1c) sur la vitre du véhicule, et **en ce que** le bras d'essuie-glace (10) présente une région d'accrochage (27) pour une extrémité de ressort (26) du ressort de traction (19), dans laquelle l'extrémité de ressort (26) peut être fixée pour produire des forces de pressage différentes dans différentes positions.

6. Dispositif d'essuie-glace (100) pour nettoyer une vitre de véhicule, comprenant un bras d'essuie-glace (10) selon l'une quelconque des revendications 1 à 5 et un balais d'essuie-glace (1a à 1c) fixé au bras d'essuie-glace (10).

7. Dispositif d'essuie-glace selon la revendication 6,
**caractérisé en ce**
**que** des balais d'essuie-glace (1a à 1c) de longueurs différentes peuvent être fixés sur le bras d'essuie-glace (10).

8. Dispositif d'essuie-glace selon la revendication 6 ou 7,
**caractérisé en ce**
**que** des balais d'essuie-glace (1a à 1c) comprenant des éléments de fixation différents peuvent être fixés au bras d'essuie-glace (10).

9. Dispositif d'essuie-glace selon l'une quelconque des revendications 6 à 8,
**caractérisé en ce**
**que** le bras d'essuie-glace (10) et une pièce d'articulation (16) sont réalisés sous forme de composant monobloc.
